# EUROPÄISCHE PATENTSCHRIFT

(11) **EP 2 101 386 B1**
(45) Veröffentlichungstag und Bekanntmachung des Hinweises auf die Patenterteilung: **11.08.2021**
(21) Anmeldenummer: 09003419.0
(22) Anmeldetag: 09.03.2009
(51) Int. Cl.: H02G 15/00, F24H 1/10, F24H 9/02, H02G 3/08

(54) **Elektrisches Haustechnikgerät**
Electric household device
Appareil électroménager

(30) Priorität: 11.03.2008 DE 102008013725
(43) Veröffentlichungstag der Anmeldung: 16.09.2009
(73) Patentinhaber: Stiebel Eltron GmbH & Co. KG, 37603 Holzminden (DE)
(72) Erfinder: Henke, Günter, 37627 Deensen (DE); Brill, Heinrich, 37269 Eschwege (DE); Mönnekes, Ursula, 37671 Höxter (DE)

(56) Entgegenhaltungen:
- EP-A1- 1 700 723
- EP-A2- 0 995 636
- EP-B1- 0 986 155
- DE-A1- 10 311 669
- DE-A1- 10 312 730
- DE-A1- 19 904 549
- DE-U1- 9 010 209
- DE-U1- 9 306 931
- DE-U1- 9 321 639
- DE-U1- 29 500 132
- US-A- 4 959 509
- None

## Beschreibung

Die vorliegende Erfindung betrifft ein elektrisches Haustechnikgerät, insbesondere einen Durchlauferhitzer.

Bei elektrischen Haustechnikgeräten, welche in Badezimmern oder Küchen verwendet werden, ist die Strahlwasserfestigkeit eine wichtige Sicherheitsvoraussetzung. Dies gilt sowohl für die Spritzwasserfestigkeit des Gehäuses als auch für den Eintritt einer elektrischen Leitung in das Gehäuse.

EP 0 986 155 B1 zeigt ein elektrisches Haustechnikgerät mit einem Gehäuse, welches eine Rückseite mit einer Kabeleinführungstülle aufweist. Die Kabeleinführungstülle wird mittels eines Zweikomponenten-Spritzgussverfahrens einstückig an die Rückwand angespritzt. Dieses Dokument zeigt den Oberbegriff des unabhängigen Anspruchs 1.

DE 10 2004 037 965 A1 zeigt ein elektrisches Heizgerät mit einer Gehäuserückwand aus einem Hartkomponentenmaterial und einem Element zum Dichten der Gehäuserückwand gegenüber einer Kabeldurchführung bestehend aus einem Weichkomponentenmaterial.

DE 199 04 549 A1 zeigt eine Kabeleinführungstülle.

DE 93 06 931 U1 zeigt ein Bügeleisen mit einer Kabeleinführungstülle.

DE 103 11 669 A1 zeigt einen Durchlauferhitzer mit einer Kabeleinführungstülle.

EP 1 700 723 A1 beschreibt eine Kabeleinführungstülle in einem Fahrzeug.

DE 103 12 730 A1 beschreibt einen Durchlauferhitzer mit einer Kabeleinführungstülle.

DE 295 00 132 U1 zeigt einen Heißwasserspeicher.

Es ist Aufgabe der vorliegenden Erfindung, ein elektrisches Haustechnikgerät vorzusehen, was eine verbesserte Strahlwasserfestigkeit aufweist.

Diese Aufgabe wird durch ein elektrisches Haustechnikgerät gemäß Anspruch 1 gelöst.

Somit wird ein elektrischer Durchlauferhitzer mit einer Rückwand und einer in der Rückwand angeordneten Tüllenaufnahmeeinheit zur Aufnahme der abnehmbaren Kabeleinführungstülle vorgesehen. Die abnehmbar ausgestaltete Kabeleinführungstülle weist ein erstes und zweites Ende auf, wobei an dem ersten Ende eine umlaufende Dichtlippe vorgesehen ist. Die Kabeleinführungstülle weist an ihrem ersten Ende ferner mindestens eine Rasteinheit zum Einrasten in die Tüllenaufnahmeeinheit auf, wobei das zweite Ende asymmetrisch ausgestaltet ist. Die Tüllenaufnahmeeinheit ist trichterförmig ausgestaltet.

Die Erfindung betrifft in einer bevorzugten Ausführungsform einen elektrischen Durchlauferhitzer mit einer Rückwand mit mindestens einer Seitenwand sowie einer Kappenaufnahmeeinheit zur Aufnahme einer Abdeckkappe. Die Kappenaufnahmeeinheit weist eine Labyrintheinheit auf, wobei die Labyrintheinheit derart mit mindestens einer Seitenwand der Kappe im montierten Zustand zusammenwirkt, dass eine spritzwasserfeste Verbindung entsteht.

Die Erfindung betrifft den Gedanken, eine Kabeleinführungstülle abnehmbar an einer Rückwand eines elektrischen Durchlauferhitzers vorzusehen. Die Kabeltülle lässt sich hierbei von außerhalb des Gerätes über den Außenmantel der elektrischen Zuleitung ziehen. Anschließend kann das Gerät an der Wand montiert werden und die Tülle kann in eine dafür vorgesehene Öffnung im Gehäuse eingerastet werden. Erfindungsgemäß ist die Kabeleinführungstülle asymmetrisch ausgestaltet, so dass ein um 180° verdrehtes Einsetzen der Kabeleinführungstülle in die Öffnung der Rückwand einen größeren seitlichen Kabelversatz der elektrischen Zuleitung ermöglicht.

Die Erfindung betrifft ebenfalls den Gedanken, eine Rückwand eines elektrischen Haustechnikgerätes mit einer Labyrintheinheit zum Abdichten eines Übergangs zwischen der Rückwand und einer Kappeneinheit vorzusehen. Optional weist die Labyrintheinheit zwei Arme auf, welche sich schräg nach außen erstrecken. Optional ist eine Feder an der Kappe und eine Nut in der Rückwand vorgesehen, so dass die Nut und die Feder einen Formschluss bilden. Mittels der gezeigten Ausgestaltung der Feder und der Nut muss die Kappe nicht von außen gegengelenkt werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Schnittansicht durch ein Gehäuse eines elektrischen Durchlauferhitzers gemäß einem ersten Ausführungsbeispiel der Erfindung,
- Fig. 2: zeigt eine Schnittansicht eines Teils eines elektrischen Durchlauferhitzers gemäß einem ersten Ausführungsbeispiel,
- Fig. 3: zeigt einen Ausschnitt einer Schnittansicht des elektrischen Durchlauferhitzers von Fig. 2,

- Fig. 4: zeigt eine weitere Schnittansicht eines Teils eines elektrischen Durchlauferhitzers gemäß einem ersten Ausführungsbeispiel,
- Fig. 5: zeigt einen Ausschnitt einer Schnittansicht eines elektrischen Durchlauferhitzers von Fig. 2,
- Fig. 6: zeigt eine Schnittansicht einer perspektivischen Ansicht eines Teils eines Durchlauferhitzers von Fig. 2,
- Fig. 7: zeigt eine weitere perspektivische Ansicht eines Teils eines Durchlauferhitzers von Fig. 2, und
- Fig. 8: zeigt eine Teilschnittansicht eines Gehäuses eines elektrischen Haustechnikgerätes gemäß einem zweiten Ausführungsbeispiel.

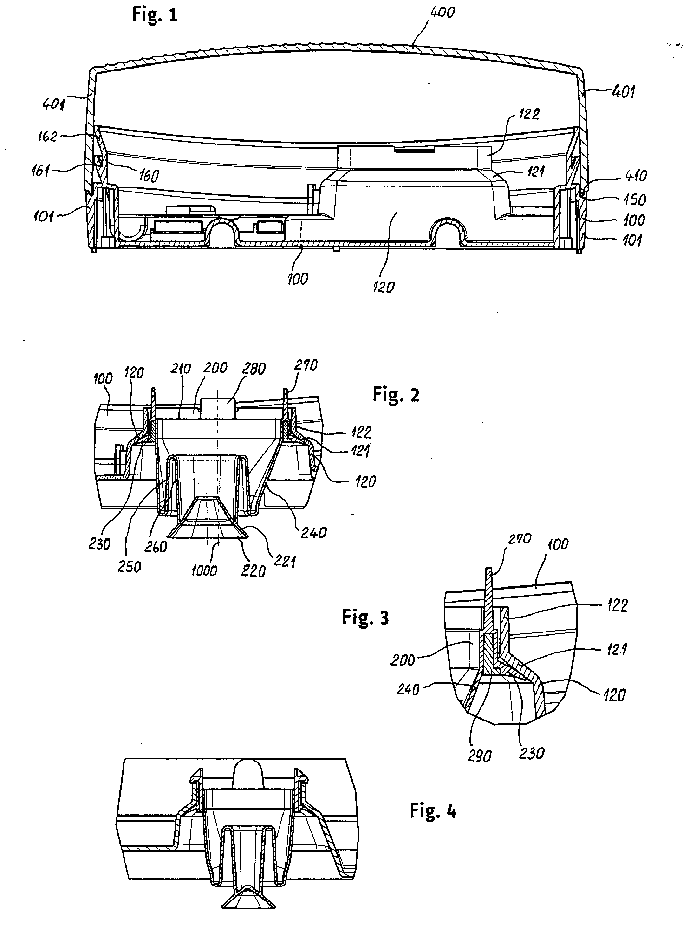

Fig. 1 zeigt eine Schnittansicht durch ein Gehäuse eines elektrischen Durchlauferhitzers gemäß einem ersten Ausführungsbeispiel der Erfindung. Das Gehäuse des Durchlauferhitzers weist eine Rückwand 100 und eine Abdeckkappe 400 auf. Die Rückwand 100 weist eine Außenwand 101 auf, welche zumindest abschnittsweise eine Aufnahmeeinheit 150,160 zur strahlwassergeschützten Aufnahme der Kappe 400 aufweist. Die Kappe 400 weist eine Seitenwand 401 auf, welche zumindest teilweise eine Feder 410 aufweist. Die Aufnahmeeinheit 150 der Rückwand 100 weist eine Nut 150 zur Aufnahme der Feder 410 der Kappe auf. Die Aufnahmeeinheit weist ferner eine Labyrintheinheit 160 auf, welche derart mit den Seitenwänden 401 der Kappe 400 zusammenwirkt, dass der Übergang zwischen der Kappe 400 und der Rückwand 100 im geschlossenen Zustand im Wesentlichen strahlwassergeschützt ist. Dazu kann die Labyrintheinheit 160 zwei Labyrintharme 161, 162 aufweisen, welche vorzugsweise in einem Winkel von < 90° angeordnet sind, so dass ein Schräglabyrinth entsteht. Die beiden Labyrintharme 161, 162 verlaufen schräg nach außen und wirken mit den Seitenwänden 401 der Kappe derart zusammen, dass keine weiteren Befestigungseinheiten benötigt werden. Ferner kann die Feder 410 und die Nut 150 derart ausgestaltet sein, dass die Kappe 400 sicher und spritzwassergeschützt an der Rückwand gehalten wird.

In der Rückwand 100 ist eine Kabeltüllenaufnahmeeinheit 120 vorgesehen. Diese Tüllenaufnahmeeinheit 120 dient dazu, eine Kabeltülle aufzunehmen. Die Tüllenaufnahmeeinheit 120 ist zumindest trichterförmig 122, 121 in dem Inneren des Gehäuses ausgestaltet, wobei das zweite Teil 122 mit dem kleineren Querschnitt in das Gehäuse hineinragt, während das erste Teil 121 mit dem größeren Querschnitt zur Rückwand 100 hin angeordnet ist.

Es sei darauf hingewiesen, dass die in der Fig. 1 gezeigte Aufnahmeeinheit zur Aufnahme der Kappe 400 optional ist und die dargestellte Labyrintheinheit ebenfalls optional ist.

Fig. 2 zeigt einen Ausschnitt einer Schnittansicht der Rückwand von Fig. 1, wobei eine Kabeltülle in die Tüllenaufnahmeeinheit 120 eingeführt ist. Die Tüllenaufnahmeeinheit 120 ist wie in Fig. 1 gezeigt durch das erste Teil 121 und das zweite Teil 122 trichterförmig ausgestaltet. Die Kabeltülle 200 wird mit ihrem ersten Ende 210 in die trichterförmige Tüllenaufnahmeeinheit 120 eingeführt. Die Kabeltülle 200 weist an ihrem ersten Ende 210 erste Vorsprünge 270 und zweite Vorsprünge 280 auf. Wenn die Kabeltülle in die Tüllenaufnahmeeinheit 120 eingeführt ist, dann liegt eine Dichtlippe 320 an dem trichterförmigen Teil 121 der Tüllenaufnahmeeinheit 120 an.

Das zweite Ende 220 der Kabeltülle 200 ist in seinem Querschnitt trichterförmig ausgestaltet und weist einen umlaufenden Vorsprung 221 bzw. eine umlaufende Lippe 221 auf. Der umlaufende Vorsprung 221 kann bei der Montage dazu dienen, als Anfasser verwendet zu werden. Der Vorsprung 270 kann dabei ebenfalls als Anfasser verwendet werden, beispielsweise um die Kabeltülle in die Tüllenaufnahmeeinheit zu montieren. Durch die Ausgestaltung des ersten Teiles 121 der trichterförmigen Aufnahmeeinheit 120 und der Dichtlippe 230 kann eine strahlwasserfeste Dichtung erreicht werden. Insbesondere wird diese Dichtung verspannt, wenn die Kabeltülle 200 in der Tüllenaufnahmeeinheit 120 montiert wird. Zwischen dem ersten Ende 210 und dem zweiten Ende 220 der Tülle ist die Tülle vorzugsweise als ein Faltenbalg 240, 250, 260 ausgebildet. In Fig. 2 ist die Mittelachse 1000 gestrichelt gezeigt. In Fig. 2 ist somit zu sehen, dass die Kabeltülle 200 asymmetrisch ausgestaltet ist. Das zweite Ende 220 der Kabeltülle 200 ist hierbei nach links verschoben. Es sei jedoch darauf hingewiesen, dass das zweite Ende 220 der Kabeltülle 200 nach rechts verschoben ist, wenn die Kabeltülle demontiert, um 180° gedreht und wieder montiert wird.

Fig. 3 zeigt einen vergrößerten Ausschnitt der Schnittansicht von Fig. 2. In Fig. 3 ist somit die Rückwand 100 mit der trichterförmigen Kabelaufnahmeeinheit 120 sowie der Kabeltülle 200 gezeigt. In Fig. 3 ist insbesondere ein Teil 240 des Faltenbalges, die Dichtlippe 230 sowie ein Vorsprung 270 gezeigt, welcher als Anfasser fungieren kann. Der Faltenbalg 200 kann ein Teil 290 aufweisen, welches vorzugsweise aus einem harten Material hergestellt ist. Die Dichtlippe sowie der Faltenbalg ist vorzugsweise aus einem weichen Material hergestellt.

Fig. 4 zeigt eine Schnittansicht einer Rückwand eines elektrischen Haustechnikgerätes von Fig. 2. Die Schnittansicht von Fig. 2 zeigt den gleichen Gegenstand wie in Fig. 2, jedoch um ca. 90° gedreht. In Fig. 4 ist somit die Rückwand 100 mit der trichterförmigen Aufnahmeeinheit 120 sowie mit einer montierten Kabeleinführungstülle 200 gezeigt. An dem ersten Ende 210 der Kabeltülle 200 sind Rasthaken 280 sowie ein Vorsprung 270 gezeigt, welcher als ein Anfasser bei der Montage dienen kann. Die Rasthaken 280, 281 greifen im montierten Zustand über das freiliegende Ende 122 des zweiten Teiles der trichterförmigen Aufnahmeeinheit ein.

Das zweite Ende 220 der Kabeleinführungstülle weist einen anderen Querschnitt als der in der Fig. 2 gezeigte auf, d. h. das zweite Ende 220 der Kabeleinführungstülle ist vorzugsweise nicht kreisrund sondern oval ausgestaltet.

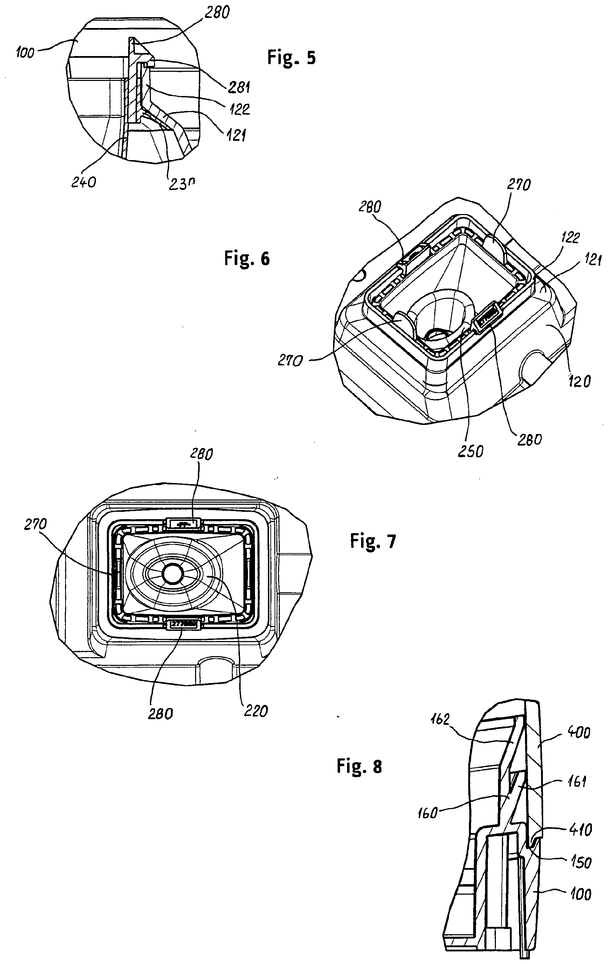

Fig. 5 zeigt einen vergrößerten Ausschnitt der Schnittansicht von Fig. 4. Hier ist die Rückwand 100 mit der trichterförmigen Aufnahmeeinheit 120 mit ihrem ersten und zweiten Teil 121, 122 gezeigt. Die Rasteinheit 281 am ersten Ende 210 der Kabeleinführungstülle 200 greift über das freiliegende Ende des zweiten Teils der trichterförmigen Aufnahmeeinheit ein, so dass die Kabeleinführungstülle sicher in der Tüllenaufnahmeeinheit 120 sitzt.

Fig. 6 zeigt eine perspektivische Ansicht eines Ausschnitts der Gehäuserückwand mit einer montierten Kabeleinführungstülle. Insbesondere ist die trichterförmige Aufnahmeeinheit 120, 121, 122 gezeigt. An dem ersten Ende 210 der Kabeleinführungstülle sind die beiden Anfasser 270 sowie die beiden Rasteinheiten 280 gezeigt.

Fig. 7 zeigt eine Draufsicht auf eine in der Tüllenaufnahmeeinheit 120 montierte Kabeleinführungstülle. In Fig. 7 ist sowohl der Faltenbalg als auch das ovale zweite Ende 220 der Kabeleinführungstülle gezeigt.

Durch die Ausgestaltung der Kabeleinführungstülle mit mindestens einer Rasteinheit 280 sowie optional den Anfassern 270 kann die Kabeleinführungstülle werkzeuglos montiert werden. Ferner kann durch die Ausgestaltung der Rasteinheiten 280 gewährleistet werden, dass die Kabeleinführungstülle lediglich mit Werkzeug wieder demontiert werden kann.

Optional kann die Kabeleinführungstülle in einem Zweikomponentenspritzgussverfahren einstückig hergestellt werden, wobei beispielsweise die Rasteinheiten 280 aus einem harten Material sind. Die Anfasser 270 dienen als Montagehilfe. Das mit der umlaufenden Lippe ausgestaltete zweite Ende 220 der Kabeleinführungstülle kann ebenfalls als Anfasser und somit als Montagehilfe dienen.

Mittels der zumindest teilweise umlaufenden Dichtlippe 230, welche mit der trichterförmigen Aufnahmeeinheit 120 zusammenwirkt, kann eine spritzwasserfeste Abdichtung der Kabeleinführungstülle zur Rückwand des Gehäuses ermöglicht werden. Ferner kann durch die Ausgestaltung der Dichtlippe 230 sichergestellt werden, dass der Ort der Dichtung von der Ausbruchsgeometrie entkoppelt ist, d. h. die undefinierte Ausbruchsgeometrie ist nicht auch gleichzeitig der Ort der Dichtung.

Somit wird eine Rückwand für einen elektrischen Durchlauferhitzer vorgesehen, welcher eine Aufnahmeeinheit 120 zur Aufnahme einer Kabeleinführungstülle 200 aufweist, wobei die Aufnahmeeinheit 120 trichterförmig ausgestaltet ist.

Die Erfindung betrifft ebenfalls eine in der Aufnahmeeinheit der Rückwand angeordnete abnehmbare Kabeleinführungstülle mit einem ersten und zweiten Ende 210, 220 sowie einer zumindest teilweise umlaufenden Dichtlippe 230. Die Kabeleinführungstülle weist an ihrem ersten Ende mindestens eine Rasteinheit zum Einrasten in eine Rückwand eines elektrischen Haustechnikgerätes auf. Das zweite Ende 220 der Kabeleinführungstülle 200 ist vorzugsweise nicht kreisrund ausgestaltet. Optional kann mindestens ein Anfasser 270 als Montagehilfe an dem ersten Ende 210 der Kabeleinführungstülle vorgesehen werden. Das zweite Ende 220 der Kabeleinführungstülle 200 ist erfindungsgemäß asymmetrisch ausgestaltet. Dies kann beispielsweise dadurch realisiert werden, dass das nicht kreisrunde zweite Ende 220 in eine Richtung verschoben ist.

Mit der oben beschriebenen Kabeleinführungstülle kann ein Einführen der elektrischen Zuleitung durch die Kabeleinführungstülle erreicht werden, ohne dass die Tülle dazu an der Rückwand eines elektrischen Haustechnikgerätes montiert sein muss. Die Montage der Kabeltülle erfolgt dann erst wenn das elektrische Zuleitungskabel durch die Kabeleinführungstülle eingeführt worden ist. Anschließend kann das Gerät an der Wand montiert werden und die Tülle kann in eine dafür vorgesehene Öffnung im Gehäuse eingerastet werden.

Fig. 8 zeigt einen vergrößerten Ausschnitt der Schnittansicht von Fig. 1 gemäß einem zweiten Ausführungsbeispiel. In Fig. 8 ist die Seitenwand 401 der Kappe 400 mit einer Feder 410 gezeigt. Die Feder 410 greift in eine Nut 150 in der Rückwand 110 formschlüssig ein. Die Rückwand 110 weist eine Labyrintheinheit 160 auf, welche einen ersten Arm 161 und einen zweiten Arm 162 aufweist, welche vorzugsweise schräg nach außen weisen. Wenn die Kappe auf der Rückwand montiert ist, dann liegen der erste und zweite Arm 160, 162 an der Seitenwand 401 der Kappe 400 dichtend an. Somit kann ein Schräglabyrinth zur Verbesserung der Strahlwassersicherheit vorgesehen werden.

Die Feder 410 und die Nut 150 bilden vorzugsweise einen Formschluss. Die Feder 410 und die Nut 150 laufen zumindest teilweise um das gesamte Gerät herum. Durch das Vorsehen der Labyrintheinheit 160 mit den beiden Armen 161, 162 kann eine zusätzliche Umlenkung an der Rückwand erreicht werden, welche einen optimalen Schutz gegen Strahlwasser vorsieht.

Mit der Ausgestaltung der Rückwand und den Seitenwänden der Kappe gemäß dem zweiten Ausführungsbeispiel kann gewährleistet werden, dass die Kappe 400 optimal auf die Rückwand 100 passt.

Somit wird eine Rückwand für ein elektrisches Haustechnikgerät vorgesehen, welches eine Labyrintheinheit 160 aufweist, welche derart ausgestaltet ist, dass sie dichtend an den Seitenwänden 420 einer Kappe anliegt, wenn die Kappe auf die Rückwand gesetzt wird.

Optional kann die Rückwand eine zumindest teilweise umlaufende Nut 150 zur Aufnahme einer Feder 410 einer Kappe 400 aufweisen.

Durch die Ausgestaltung der Seitenwände der Rückwand und der Seitenwände der Kappe kann ein dichtender Abschluss zwischen der Rückwand und der Kappe ohne weitere Haken erreicht werden. Durch die Ausgestaltung der Nut und der Feder kann die Kappe nicht mehr seitlich von dem Gehäuse abgenommen werden, was zu einem verbesserten Strahlwasserschutz führt.

## Patentansprüche

1. Elektrischer Durchlauferhitzer, mit
einer Rückwand (100),
einer in der Rückwand (100) angeordneten Tüllenaufnahmeeinheit (120) zur Aufnahme einer Kabeleinführungstülle (200), **gekennzeichnet durch** eine abnehmbare
Kabeleinführungstülle (200) mit einem ersten und zweiten Ende (210, 220) sowie einer teilweise an dem ersten Ende (210) umlaufenden Dichtlippe (230),
wobei die Kabeleinführungstülle (200) an ihrem ersten Ende (210) ferner mindestens eine Rasteinheit (280) zum Einrasten in die Tüllenaufnahmeeinheit (120) aufweist und wobei das zweite Ende (220) der Kabeleinführungstülle (200) asymmetrisch ausgestaltet ist und
wobei die Tüllenaufnahmeeinheit (120) trichterförmig ausgestaltet ist.

2. Elektrischer Durchlauferhitzer nach Anspruch 1, wobei das zweite Ende (220) der Kabeleinführungstülle (200) nicht kreisrund ausgestaltet ist.

3. Elektrischer Durchlauferhitzer nach einem der Ansprüche 1 bis 2, wobei mindestens ein Anfasser (270) an dem ersten Ende (210) der Kabeleinführungstülle (200) vorgesehen ist.

4. Elektrischer Durchlauferhitzer nach einem der Ansprüche 1 bis 3 wobei die Rückwand (100) mindestens eine Seitenwand (101) aufweist, und
eine Kappenaufnahmeeinheit (150, 160) zur Aufnahme einer Kappe (400),
wobei die Kappenaufnahmeeinheit (150, 160) eine Labyrintheinheit (160) aufweist, wobei die Labyrintheinheit (160) derart mit mindestens einer Seitenwand (401) der Kappe (400) im montierten Zustand zusammenwirkt, dass eine spritzwasserfeste Verbindung entsteht.

5. Elektrischer Durchlauferhitzer nach Anspruch 4, wobei
die Labyrintheinheit (160) mindestens einen ersten und zweiten Arm (161, 162) aufweist, welche schräg nach außen ausgestaltet sind.

6. Elektrischer Durchlauferhitzer nach Anspruch 5, ferner mit einer Nut (150) in der Seitenwand (101) der Rückwand (100) und einer Feder (410) in der Seitenwand (401) der Kappe (400), wobei die Feder (410) formschlüssig in der Nut (150) aufgenommen wird.

## Claims

1. An electric instantaneous water heater, comprising
a back panel (100),
a grommet receiving member (120) disposed in the back panel (100) for receiving a cable entry grommet (200),
**characterised by** a removable cable entry grommet (200) comprising a first and a second end (210, 220) and a sealing lip (230) extending partially around its circumference on the first end (210),
wherein the cable entry grommet (200) further includes as least one engaging member (280) on its first end (210) for engaging the grommet receiving member (120), and wherein the second end (220) of the cable entry grommet (200) is of an asymmetric shape, and
wherein the grommet receiving member (120) is funnel-shaped.

2. The electric instantaneous water heater according to claim 1, wherein the second end (220) of the cable entry grommet (200) is of a non-circular shape.

3. The electric instantaneous water heater according to one of claims 1 to 2, wherein at least one grip (270) is provided on the first end (210) of the cable entry grommet (200).

4. The electric instantaneous water heater according to one of claims 1 to 3, wherein the back panel (100) includes at least one side wall (101), and
a cap receiving member (150, 160) for receiving a cap (400),
wherein the cap receiving member (150, 160) includes a labyrinth member (160), wherein the labyrinth member (160) cooperates with at least one side wall (401) of the cap (400) in the installed state such that a splash proof connection is created.

5. The electric instantaneous water heater according to claim 4, wherein
the labyrinth member (160) includes at least a first and a second arm (161, 162) having an outwardly angled shape.

6. The electric instantaneous water heater according to claim 5, further comprising a groove (150) in the side wall (101) of the back panel (100) and a key (410) in the side wall (401) of the cap (400), wherein the key (410) is received in the groove (150) in a form fit.

## Revendications

1. Chauffe-eau électrique instantané, comportant :
une paroi arrière (100),
une unité d'intégration de passe-fil (120) disposée dans la paroi arrière (100) et destinée à intégrer un passe-fil pour câbles (200),
**caractérisé par** un passe-fil pour câbles (200) amovible comportant une première et une deuxième extrémité (210, 220) ainsi qu'une lèvre d'étanchéité (230) périphérique partiellement disposée sur la première extrémité (210),
le passe-fil pour câbles (200) présentant en outre à sa première extrémité (210) au moins une unité d'enclenchement (280) destinée à être enclenchée dans l'unité d'intégration de passe-fil (120), la deuxième extrémité (220) du passe-fil pour câbles (200) étant de forme asymétrique, et
l'unité d'intégration de passe-fil (120) étant conçue en forme d'entonnoir.

2. Chauffe-eau électrique instantané selon la revendication 1, dans lequel la deuxième extrémité (220) du passe-fil pour câbles (200) n'est pas de forme ronde.

3. Chauffe-eau électrique instantané selon l'une des revendications 1 et 2, dans lequel au moins un élément de préhension (270) est prévu sur la première extrémité (210) du passe-fil pour câbles (200).

4. Chauffe-eau électrique instantané selon l'une des revendications 1 à 3, dans lequel la paroi arrière (100) présente au moins une paroi latérale (101) et
une unité d'intégration de couvercle (150, 160) destinée à intégrer un couvercle (400),
l'unité d'intégration de couvercle (150, 160) présentant une unité de labyrinthe (160), ladite unité de labyrinthe (160) interagissant, après montage, avec au moins une paroi latérale (401) du couvercle (400) de manière à créer une liaison étanche aux éclaboussures d'eau.

5. Chauffe-eau électrique instantané selon la revendication 4, dans lequel l'unité de labyrinthe (160) présente au moins un premier et un deuxième bras (161, 162) disposés en biais vers l'extérieur.

6. Chauffe-eau électrique instantané selon la revendication 5, comportant en outre une rainure (150) dans la paroi latérale (101) de la paroi arrière (100) et une languette (410) dans la paroi latérale (401) du couvercle (400), la languette (410) logeant dans la rainure (150).
